# EUROPEAN PATENT APPLICATION

(11) **EP 2 765 316 A2**
(43) Date of publication of application: **13.08.2014**
(21) Application number: 13193289.9
(22) Date of filing: 18.11.2013
(51) Int. Cl.: F16B 21/07, F16B 19/00, F16B 5/06

(54) **Fastening device**

(30) Priority: 20.11.2012 GB 201221409
(71) Applicant: AIRBUS OPERATIONS LIMITED, Filton Bristol Bristol BS99 7AR (GB)
(72) Inventor: Hobday, John, Bristol BS99 7AR (GB)
(74) Representative: Gregory, John David Charles

(57) **Abstract**

The present invention concerns fastening devices. More particularly, but not exclusively, this invention concerns a fastening device suitable for fastening two or more separate items together. The invention provides a fastening device comprising: a first fixing element (12) and a second fixing element (14). The first fixing element (12) comprises a locking member (16) and the second fixing element comprises an elongate member (18). The locking member (16) is configured to allow passage of the elongate member (18) through the first fixing element (12) in a first direction and resist passage of the elongate member (18) through the first fixing element (12) in a second direction, the second direction being opposite to the first direction.

## Description

### Field of the Invention

The present invention concerns fastening devices. More particularly, but not exclusively, this invention concerns a fastener suitable for fastening two or more separate items together. The invention also concerns a fastener for use when securing aircraft components together.

### Background of the Invention

Ratchet-based fastening devices have been used for fastening items together for some time. A simple example of a ratchet-based fastening device is a zip or cable tie. An end head comprising a flexible pawl is located at the end of an elongate strip, the elongate strip comprising a plurality of indentations. The elongate strip is flexible to allow it to be bent back around towards the end head, and inserted through the end head. The flexible pawl is arranged to flex to allow the elongate strip to pass through the end head in one direction, but engage with the indentations if an attempt is made to move the elongate strip in the opposite direction. Therefore, the zip tie can be placed in position and tightened to the required level, after which it will securely hold whatever it has been placed around. Common uses involve securing a number of cables together. However, cable ties are not suitable for joining many types of structural elements together, for example two planar structural elements where it is not possible to loop the elongate portion back around into engagement with the end head.

An alternative ratchet-based fastening device may be designed for securing the engagement of two approximately planar mechanical elements, for example structural elements of an aircraft, in particular planar structural elements of an aircraft. A ratchet fastener may comprise a receiving bolt including a cylindrical sleeve with a plurality of teeth on an inner surface, and a fixing bolt including a cylindrical shaft including a plurality of teeth on an outer surface, the cylindrical shaft of the fixing bolt shaped to fit within the cylindrical sleeve of the receiving bolt such that the respective teeth engage, allowing movement in a first direction and resisting movement in a second, opposite direction. Generally the first direction is the direction in which the receiving bolt and fixing bolt are pushed together and the second direction is the opposite, pulling apart direction. This arrangement allows the receiving bolt to be placed in a opening extending through a number of structural elements from a first side, and the fixing bolt to be engaged with the receiving bolt via insertion from the other side of the opening until the respective teeth have engaged as described. The two bolts may be pushed together until the structural elements they are fastening are held in tight engagement. In order to provide a secure fastening, the receiving bolt is usually a tight fit with the opening through which it extends. The opening will comprise a number of aligned holes in the individual structural elements that are being fastened together. To be able to push the receiving bolt through the opening, the holes must be very closely aligned. If the holes are not closely aligned, the receiving bolt will be obstructed and will not be able to fasten the structural elements together. The present invention seeks to mitigate the above-mentioned problems. Alternatively or additionally, the present invention seeks to provide an improved fastener.

### Summary of the Invention

The present invention provides a fastener comprising: a first fixing element; a second fixing element; the first fixing element comprising a locking member; the second fixing element comprising an elongate member; the locking member configured to allow passage of the elongate member through the first fixing element in a first direction and resist passage of the elongate member through the first fixing element in a second direction, the second direction being opposite to the first direction.

Advantageously the fastener provides a quick and simple way of fastening two or more components together. The first fixing element and second fixing element are distinct, separate elements and thus it is straightforward to place the first fixing element on one side of a joint and the second fixing element on a second side of a joint. The elongate strip of the second fixing element may be engaged with the locking member of the first fixing element, through a passage in the two or more components and pulled tight, such that the first fixing element is biased against one part of the components and the second fixing element is biased against another part of the components, thereby holding the components together. The two parts may be located on opposite sides of the component structure. The elongate strip may be flexible. The elongate strip may be resiliently flexible.

Advantageously, the fastener allows the component structure to be secured by applying pulling force to one side of the fastener only. This is in direct contrast to the prior art fasteners that require pushing force to be applied to both sides of the fastener. This may allow the fastener according to the invention to be used to secure two or more components together where access to one side of the components is restricted. The second fixing element will be required to be placed in position on one side of the components, but once in place it may be pulled through from the other side of the components to secure them together.

Advantageously, the fastener may be used to secure components together without initially requiring exact alignment of the holes through which the fastener will extend. The elongate member of the second fixing element may have a cross-section substantially smaller than the cross section of the holes in the components being secured, and may be passed through misaligned holes and as the fastener is pulled together, the first fixing element and second fixing element may act on the components to bring the holes into alignment. This may reduce the set up time required when fastening components together.

The locking member may be a locking ratchet. The locking ratchet may comprise a single one-way pawl or a double one-way pawl. The first fixing element may comprise a head portion, the head portion formed separately or distinctly from the locking member. Alternatively, the first fixing element may be integrally formed with the locking member. The elongate member may be a ratchet strip. The ratchet strip may be a single-sided or double-sided ratchet strip. The second fixing element may comprise a head portion arranged at one end of the elongate member, the head portion configured to be unable to pass through the locking member. The head portions of the first fixing element and second fixing element may be configured to engage with the components the fastener is being used to secure. The shape, configuration, and composition of the head portions may be specific to the components the fastener is being used to secure. For example, a head portion may be a large flat disk in order to spread any load experienced by the fastener over the face of the component with which it is engaged. The head portions may present a profile that acts to align the components as the fastener is pulled together. A head portion may present a bevelled profile suitable for being countersunk into a component with which it is engaged in order to provide a flush fitting on the face of the component. Such a profile may help to align the components as described above. The bevelled profile may be a straight bevel, a convex bevel, or a concave bevel.

A head portion may comprise an outer surface, the outer surface arranged to be accessible once the fastener is secured in place. The outer surface of a head portion may comprise a fixing device such as a hook, eyelet, stud, or loop for fixing of additional elements, for example cabling or piping.

The fastener may comprise a plastic, nylon or metal material. The fastener may comprise one or more materials. For example, the elongate member and locking member may be metal material and the remainder of the first fixing element and second fixing element may be a plastic material.

A portion of the first fixing element may be shaped to engage with a portion of the second fixing element when the elongate member of the second fixing element has passed through the locking member of the first fixing element to a sufficient degree. The portions of the first fixing element and second fixing element may be sleeves. Such an arrangement may provide shear strength to the fastener.

The elongate member may be pulled through the locking member in the first direction by a tool. The tool may be arranged to cut or snap off any part of the elongate member which protrudes from the outer surface of the head portion of the first fixing element. In an alternative arrangement, the elongate member may be pulled through the locking member manually, and any protruding portion cut or snapped off manually.

The fastener may be used to fasten a wide variety of components. The fastener is configured such that it may be used to fasten various thicknesses of component together. As an example, the fastener may be used to fasten together components of an aircraft.

A further aspect of the invention provides a method of fastening two or more components together comprising the steps of: providing a first fixing element comprising a locking member; providing a second fixing element comprising an elongate strip; the locking member configured to allow passage of the elongate member through the first fixing element in a first direction and resist passage of the elongate member through the first fixing element in a second direction, the second direction being opposite to the first direction;
inserting the elongate member of the second fixing element through the two or more components, engaging the elongate member with the locking member and moving the elongate member in the first direction such that the elongate member passes through the locking member and the first fixing element and second fixing element fasten together the two or more components. The method may further comprise the step of removing any part of the elongate member that protrudes through and beyond the first fixing element. The second fixing element may comprise a head portion arranged to abut one of the two or more components. The head portion is preferably of such a size and/or shape that it is unable to pass through the opening in the two or more components. The first fixing element may also comprise a head portion. The head portion of the first fixing element is preferably of such a size and/or shape that it is unable to pass through the opening in the two or more components. The opening through the two or more components may comprise a number of co-aligned holes, each component comprising a hole. The passageway may have an approximately circular cross-section, defining a cylindrical passageway. The passageway may have a square or triangular cross-section. The head portions of the first fixing element and second fixing element may be configured for partial engagement with the passageway through the two or more components. If, for example, the passageway has a square cross-section, the head portions may also have a square cross-section with a tight fit within the square passageway. Such an arrangement will prevent rotation of the fastener once in position.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1: shows a cross-section view of a fastener according to a first embodiment of the invention;
- Figure 2: shows the fastener according to the first embodiment of the invention in full engagement;
- Figures 3A, 3B, and 3C: show the steps involved in using the fastener to fasten to components together;
- Figure 4: shows a cross-section view of a fastener according to a second embodiment of the invention; and
- Figure 5: shows a cross-section view of the fastener according to the second embodiment of the invention in full engagement.

### Detailed Description

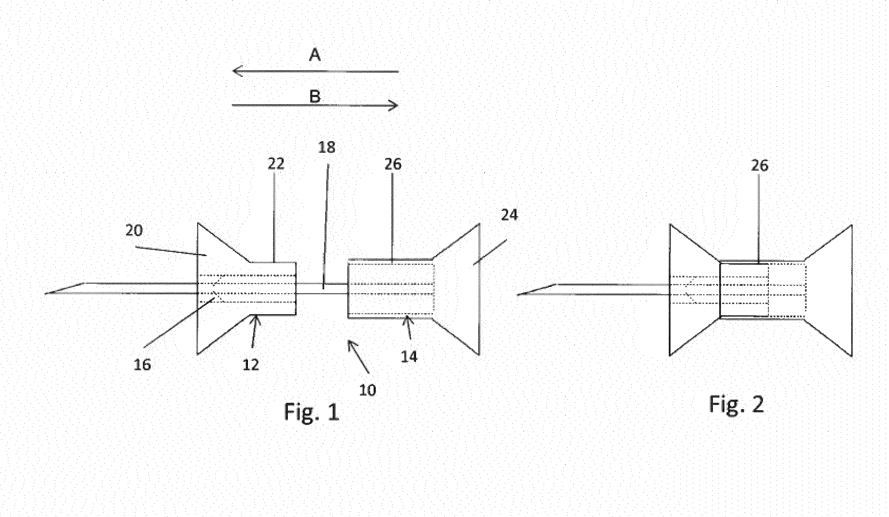

Figure 1 shows a fastener 10 according to a first embodiment of the invention. The fastener 10 comprises a first fixing element 12 and a second fixing element 14. The first fixing element comprises a locking member 16 in the form of two one-way ratchet pawls. The second fixing element comprises an elongate member 18 comprising a ratchet strip, configured to be able to pass through the locking member 16 in a first direction A, and resist movement through the locking member 16 in a second, opposite, direction B. The first fixing element 12 further comprises a head portion 20 through which the locking member 16 extends, and a first sleeve 22. The second fixing element further comprises a head portion 24 and a second sleeve 26. The second sleeve 26 has approximately the same cross-sectional shape as the first sleeve 22, but with a slightly larger diameter in order that the first sleeve 22 may be inserted into a receiving portion 28 of the sleeve 24. When the first fixing element 12 and second fixing element 14 are used as a fastener, the elongate member 18 is passed through the locking member 16 in the first direction A, and pulled tight such that the first sleeve 22 is located within and extends into the receiving portion 28 of the second sleeve 26. The first sleeve 22 and second sleeve 26 may act against each other when shear forces are being transmitted through the fastener 10, providing additional shear strength to the fastener 10. Figure 2 shows the first fixing element 12 and second fixing element 14 in engagement as will be the case when the fastener 10 is in use.

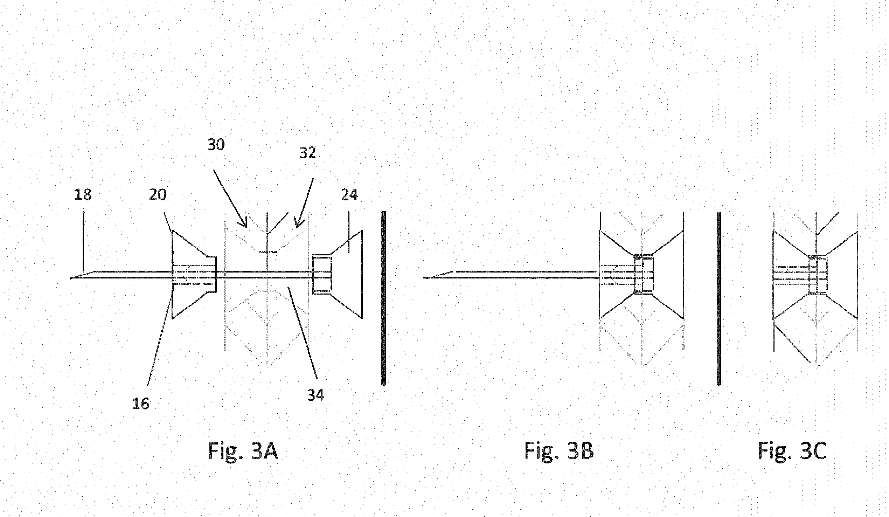

The head portion 20 of the first fixing element 12 and the head portion 24 of the second fixing element 14 are shaped to be countersunk into depressions made in the components the fixing elements are being used to fasten together. Figures 3A, 3B, and 3C, show the fastener 10 being placed in situ, with the head portions 20, 24, countersunk as described. A first component 30 and second component 32 are placed in contact with each other such that a passageway 34 is created, through which to pass the elongate member 18. The elongate member 18 is pulled through the locking member 16, which is located on the opposite side of the two components, until both first fixing element 12 and second fixing element 14 are in contact with the respective components 30 and 32. The head portions 20 and 24 are also shaped to be partially received within the passageway 34.

Advantageously, the sleeves 22 and 26 allow the fastener 10 to be used to fasten together items of different thicknesses, whilst still providing some shear structural rigidity to the fastener 10. When the fastener is used as shown in figures 3A, 3B, and 3C, the thickness of the two components is such that the first sleeve 22 fully extends into the receiving portion 28 of the second sleeve 26. This provides the greatest structural rigidity to the fastener 10 in the shear direction. However, the fastener 10 may also be used to fix thicker components together, with the first sleeve 22 partially extending into the receiving portion 28 of the second sleeve 26, whereupon it may also provide some structural rigidity to the fastener 10

When the elongate member 18 has been pulled through the locking member 18 and the fastening is tightly in place, the excess of the elongate member 18, extending beyond the head portion 20, may be removed by being cut or snapped away.

The fastener 10 may comprise a plastic material. Alternatively, the fastener 10 may comprise a metal material. In an alternative embodiment, the fastener 10 may comprise a number of different materials. For example, the elongate member 18 and locking member 16 may be metal, and the head portions 20, 24, may be plastic. The material or materials chosen to make up the fastener are preferably chosen to provide the fastener 10 with the desired structural and functional characteristics.

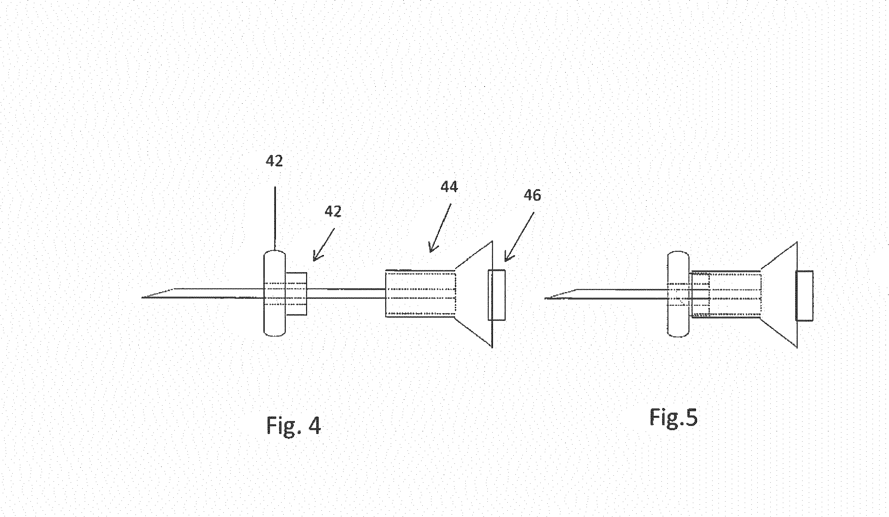

Figures 4 and 5 show an embodiment of the invention very similar to that shown in figures 1 to 3, though with the first fixing element 40 comprising a different shape of head portion 42. The second fixing element 44 includes a cable guide 46 on the outer surface, providing additional functionality to the fastener. Otherwise the embodiment is configured to work in an identical way to that as described above.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The head portions of the fastener 10 may have some external fixing elements formed on their outer surface, for example hooks or cable guides. The skilled person will realise that many different fixing elements could be thus provided and an exhaustive list is not provided. The locking mechanism may comprise a single-pawl ratchet. Alternatively the locking mechanism and elongate member may comprise any suitable configuration that allows movement of the elongate member through the locking member in a first direction and resists movement of the elongate member in a second, opposite direction.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A fastener comprising:
a first fixing element;
a second fixing element;
the first fixing element comprising a locking member;
the second fixing element comprising an elongate member;
the locking member configured to allow passage of the elongate member through the first fixing element in a first direction and resist passage of the elongate member through the first fixing element in a second direction, the second direction being opposite to the first direction,
wherein a portion of the first fixing element is shaped to engage with a portion of the second fixing element when the elongate member of the second fixing element has passed through the locking member of the first fixing element to a sufficient degree
wherein the portions of the first fixing element and second fixing element are sleeves.

2. A fastener as claimed in claim 1, wherein the locking member is a locking ratchet.

3. A fastener as claimed in claim 2, wherein the elongate member is a ratchet strip.

4. A fastener as claimed in any preceding claim, wherein the first fixing element comprises a head portion, the head portion with a larger diameter than the locking member.

5. A fastener as claimed in any preceding claim, wherein the second fixing element comprises a head portion, the head portion with a larger diameter than the elongate portion.

6. A fastener as claimed in claim 4 or claim 5, wherein a head portion of the first fixing element or second fixing element comprises an outer surface with a fixing device.

7. A method of fastening two or more components together comprising the steps of:
providing a first fixing element comprising a locking member;
providing a second fixing element comprising an elongate strip;
the locking member configured to allow passage of the elongate member through the first fixing element in a first direction and resist passage of the elongate member through the first fixing element in a second direction, the second direction being opposite to the first direction;
wherein a portion of the first fixing element is shaped to engage with a portion of the second fixing element when the elongate member of the second fixing element has passed through the locking member of the first fixing element to a sufficient degree
wherein the portions of the first fixing element and second fixing element are sleeves;
inserting the elongate member of the second fixing element through the two or more components, engaging the elongate member with the locking member and moving the elongate member in the first direction such that the elongate member passes through the locking member and the first fixing element and second fixing element fasten together the two or more components.

8. A method as claimed in claim 9, further comprising the step of removing any part of the elongate member that protrudes through and beyond the first fixing element.
